# EUROPÄISCHE PATENTANMELDUNG

(11) **EP 1 604 560 A1**
(43) Veröffentlichungstag der Anmeldung: **14.12.2005**
(21) Anmeldenummer: 05012635.8
(22) Anmeldetag: 13.06.2005
(51) Int. Cl.: A01C 23/02, A01M 17/00

(54) **Verfahren und Vorrichtung zum Einbringen von flüssigen Stoffen in den Erdboden**

(30) Priorität: 13.06.2004 DE 102004028291; 11.09.2004 DE 102004043983
(71) Anmelder: Maschinen- und Antriebstechnik GmbH & Co. KG, 18273 Güstrow (DE)
(72) Erfinder: Mahrwald, Jürgen, Dr., 18273 Güstrow (DE)
(74) Vertreter: Jaap, Reinhard

(57) **Zusammenfassung**

Zum Einbringen von flüssigen Stoffen in den Erdboden wird ein Verfahren und eine dazugehörige Vorrichtung vorgeschlagen, mit dem der flüssige Stoff konzentrierter und gezielter injiziert werden kann. Dabei soll die dementsprechende Vorrichtung einfacher im Aufbau und anpassungsfähiger an unterschiedliche Einsatzfälle sein.

Erreicht wird dies dadurch, dass für jede Pflanzreihe nur ein Injektionsrohr (6) verwendet wird und dass das Injektionsrohr (6) im Intervall und annähernd vertikal in den Erdboden eingestochen wird und während der Weiterfahrt der Vorrichtung für eine vorbestimmte Zeiteinheit an der Einstichstelle verbleibt.

Derartige Verfahren und Vorrichtungen werden von gärtnerischen, land- und forstwirtschaftlichen Betrieben zum Einbringen von flüssigen Stoffen, beispielsweise von Düngemitteln oder Pflanzenschutzmitteln in den Wurzelbereich von Kulturpflanzen angewendet.

## Beschreibung

Die Erfindung bezieht sich auf ein Verfahren nach dem Oberbegriff des Anspruchs 1 und auf eine dementsprechende Vorrichtung nach dem Oberbegriff des Anspruchs 5. Derartige Verfahren und Vorrichtungen werden von gärtnerischen, land- und forstwirtschaftlichen Betrieben zum Einbringen von flüssigen Stoffen, beispielsweise von Düngemitteln oder Pflanzenschutzmitteln in den Wurzelbereich von Kulturpflanzen angewendet.

Kulturpflanzen müssen zur Erhaltung und Steigerung ihrer Erträge regelmäßig mit Düngemitteln und/ oder mit Pflanzenschutzmittel versorgt werden. Das geschieht in der Regel bei Düngemitteln in einer flächendeckenden Streuung, die uneffektiv ist. So erreichen die körnigen Düngemittel die Pflanzenwurzel zum Teil erst nach Tagen und dann auch nur in einer Teilmenge, weil die Düngemittel in der Zwischenzeit durch Oberflächenwasser abgeschwemmt oder unterirdisch ausgewaschen oder in die freie Atmosphäre abgegast sind. Diese Art der Ausbringung von Düngemittel bzw. Pflanzenschutzmittel bringt daher wirtschaftliche Verluste mit sich und belastet die Umwelt.

Zur Vermeidung dieser Nachteile gibt es seit geraumer Zeit Bestrebungen, diese Düngemittel bzw. Pflanzenschutzmittel in flüssiger Form auszubringen und sie gezielt in den Wurzelbereich der Kulturpflanze zu injizieren.

Dazu ist aus der EP 1 086 617 A1 beispielsweise eine Vorrichtung bekannt, die aus einer Mehrzahl von parallel zueinander angeordneten Speichenrädern besteht. Diese Speichenräder haben ein gemeinsames Kanalsystem, das einerseits über eine Zuführleitung mit einem transportablen Flüssigkeitstank verbunden ist und das andererseits zu den radialen Enden der Speichen aller Speichenräder führt. Dabei ist auf das Ende jeder Speiche eine freistehender Bodeninjektionsnadel mit einer radialen Austrittsöffnung aufgesetzt, die während der Lauf- und Drehbewegung des Speichenrades in den Erdboden eintaucht. Das gemeinsame Kanalsystem besitzt innerhalb der Radnabe eine Verteilungseinrichtung, die das Kanalsystem stets und nur mit der Speiche eines Speichenrades verbindet, dessen Spoke sich gerade im Erdboden befindet. Durch den im Kanalsystem herrschenden Flüssigkeitsdruck wird die einzubringende Flüssigkeit aus der Austrittsöffnung der im Erdboden befindlichen Speiche in den Wurzelbereich der Kulturpflanze befördert.

In unmittelbarer Nähe der radialen Austrittsöffnung jedes Spokes befindet sich innerhalb der Speiche ein Tropfschutzventil, das verhindern soll, dass die noch in der auftauchenden Speiche befindliche Flüssigkeit ausläuft und sich an der Erdoberfläche verteilt. Dazu ist das Tropfschutzventil als ein Kugelrückschlagventil ausgebildet, dessen Ventilkugel von einer metallischen Druckfeder belastet wird.

Die Vorrichtung hat zunächst funktionelle Nachteile. Durch die größere Umfangsgeschwindigkeit der in den Erdboden eintauchenden Spokes gegenüber dem auf der Erdoberfläche abrollenden Speichenrad werden die freien Enden der Spokes und damit die in diesem Spitzenbereich jeweils angesiedelte radiale Austrittsöffnung für den flüssigen Stoff über eine bestimmte Wegstrecke praktisch durch das Erdreich gezogen. Das führt dazu, dass auch der flüssige Stoff über diese Wegstrecke verteilt in das Erdreich injiziert wird und somit nicht konzentriert zur Verfügung steht. Durch die relative Bewegung der radialen Austrittsöffnung für den flüssigen Stoff gegenüber dem Erdreich besteht auch die Gefahr des Zusetzens der Austrittsöffnung, wodurch die Injektion nachhaltig gestört wird. Ein weiterer funktioneller Nachteil ergibt sich durch das notwendige Tropfschutzventil. So hat sich herausgestellt, dass sich im Einbauraum der Druckfeder Restmengen an Flüssigkeit sammeln, die nach einer längeren Verweilzeit auskristallisieren und die Funktion der metallischen Druckfeder außer Funktion setzen. Damit kann der Kulturpflanze nach einer erneuten Inbetriebnahme der Vorrichtung keine dosierte Menge an Flüssigkeit mehr bereitgestellt werden. Entweder öffnet das Tropfschutzventil nicht im gewollten Maße, sodass entweder die Flüssigkeit nicht mehr wie erforderlich austreten kann, oder das Tropfschutzventil schließt nicht mehr und die in der Speiche befindliche Restmenge an Flüssigkeit kann sich nach dem Auftauchen aus dem Erdboden in unzulässigerweise oberflächlich verteilen. Daher muss das Tropfschutzventil nach jedem Arbeitseinsatz aufwendig gereinigt und so für den nächsten Arbeitseinsatz vorbereitet werden.

Die Vorrichtung ist auch nicht sehr leistungsfähig. So weisen die parallelen Speichenräder einen relativ großen Durchmesser auf, um einen Abstand zwischen den einzelnen Spokes eines jeden Speicherrades zu erzielen, der dem Pflanzenabstand innerhalb einer Pflanzreihe entspricht. Außerdem müssen die Radnaben konstruktiv groß und robust ausgeführt sein, damit die entsprechende Flüssigkeitsverteilungseinrichtung Platz findet und die Speichenräder eine ausreichende Stabilität erhalten. Das alles führt aber zwangsläufig zu einer großen Masse, die den Bodendruck erhöht und zu einem erheblichen Schleppwiderstand führt. Dieser hohe Schleppwiderstand verlangt einen leistungsstarken Antrieb und begrenzt die Anzahl der parallelen Speichenräder und damit eine Auslegung der Vorrichtung in ihrer Breite erheblich.

Die Vorrichtung ist auch nur begrenzt einsetzbar, weil die Radnaben wegen der Robustheit der Nabenräder eine sehr große Breite haben und sich daher ein relativ großer Abstand zwischen den Speichenrädern ergibt. Mit diesem breiten Abstand der Speichenräder können Pflanzreihen in einem üblichen Reihenabstand von 12,5 cm und weniger nicht bearbeitet werden.

Die Vorrichtung ist auch reparaturanfällig, weil die freistehenden Spokes in durch die relative Bewegung zum Erdreich und durch das häufige Auftreffen auf steinige Hindernisse zusätzlich belastet werden. Trotzt erhöhter Aufwendungen zur Verstärkung und zur Materialauswahl unterliegen die Spokes durch Verbiegung oder durch Brechen einem hohen Verschleiß.

Die Vorrichtung ist aber auch sehr teuer, weil eine Vielzahl von Speichenräder und Spokes erforderlich sind und die robuste und großvolumige Ausführung der Speichenräder und die hochwertige Ausführung der Spokes einen hohen Materialeinsatz und die Aggressivität der flüssigen Stoffe den Einsatz von widerstandsfähigen und damit hochwertigen Materialien verlangen.

Es besteht daher die Aufgabe, ein gattungsgemäßes Verfahren zu entwickeln, mit dem der flüssige Stoff konzentrierter und gezielter injiziert werden kann. Die dementsprechende Vorrichtung soll einfacher im Aufbau und anpassungsfähiger an unterschiedliche Einsatzfälle sein.

Die verfahrensseitige Aufgabe wird durch die kennzeichnenden Merkmale des Anspruchs 1 und die vorrichtungsseitige Aufgabe durch die kennzeichnenden Merkmale des Anspruchs 5 gelöst. Zweckdienliche Ausgestaltungen ergeben sich aus den Ansprüchen 2 und 4 sowie 6 bis 11.

Die neuen Lösungen beseitigen die genannten Nachteile des Standes der Technik.

Im Kern besteht die neue technische Lehre darin, die Funktionen der zur Fortbewegung der Vorrichtung dienenden Räder von den Funktionen der Injektionseinrichtungen zu trennen. Dabei können die Funktionen der jeweiligen Injektionseinrichtung sowohl von externen Antriebs- und Steuereinheiten als auch von den Bewegungen der Räder aktiviert werden. Beim Antrieb und der Steuerung der Injektionseinrichtung durch die Räder der Vorrichtung ist die Verwendung der unterschiedlichsten Getriebe und Steuereinrichtungen möglich. Dadurch wird die Vorrichtung einfacher und leichter im Aufbau und besser in der Anpassung an unterschiedliche Anwendungsfälle.

Die Vorrichtung ist auch wenig anfällig gegen Beschädigungen durch vorhandene Bodenhindernisse, wie Steine und dergleichen, da beim Auftreffen der Vorrichtung auf ein solches Hindernis, das Injektionsrohr an dieses Hindernis anschlägt und die weitere Eindrückkraft durch Federelemente gedämpft und dadurch das Injektionsrohr sowie dessen Spokespitze gegen Deformation oder Bruch geschützt wird.

Das neue Verfahren und die neue Vorrichtung sollen nachstehend an Hand zweier Ausführungsbeispiele näher erläutert werden.

Dazu zeigen:
- **Fig. 1**: eine schematisierte Seitendarstellung der Vorrichtung in einem ersten Ausführungsbeispiel und
- **Fig. 2**: eine schematisierte Seitendarstellung der Vorrichtung in einem zweiten Ausführungsbeispiel.

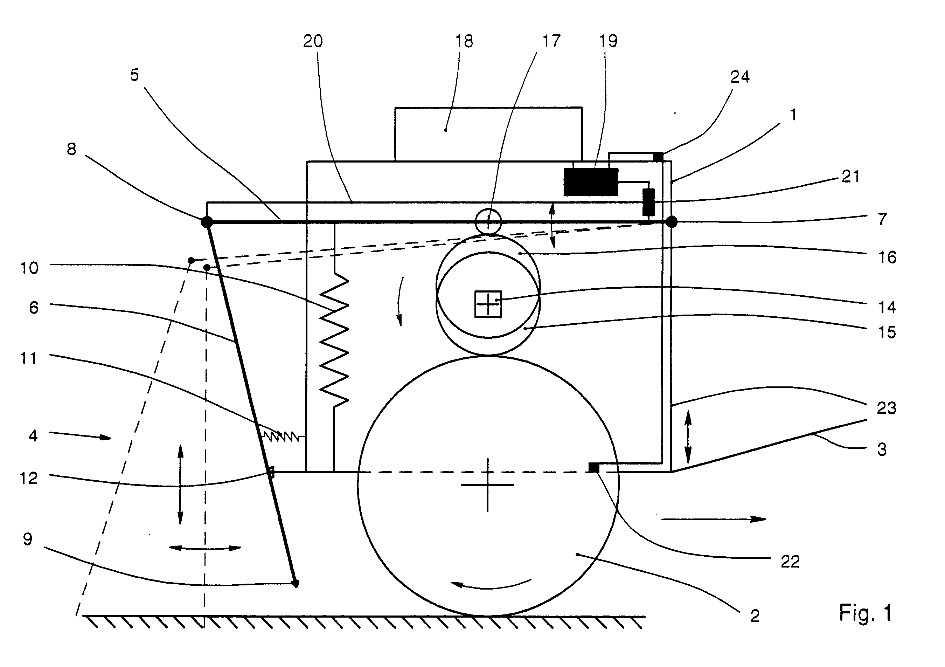

Danach besteht die Vorrichtung zum Einbringen eines flüssigen Stoffes in den Erdboden im ersten Ausführungsbeispiele gemäß der Figur 1 aus einem kastenförmigen Rahmen 1, der sich in der Breite über mehrere Pflanzreihen erstreckt. Dieser kastenförmige Rahmen 1 ist in fahrfähiger Weise auf mindestens zwei, seitlich angeordneten Rädern 2 aufgesetzt und mit einer Zugstange 3 ausgestattet, die zur Ankupplung an eine nicht dargestellte Zugmaschine dient. Der kastenförmige Rahmen 1 trägt weiterhin mehrere parallel zueinander angeordnete und sich über die Breite des kastenförmigen Rahmens 1 erstreckende Injektionseinrichtungen 4. Jede dieser Injektionseinrichtungen 4 besteht aus einem waagerecht ausgerichteten Gelenkarm 5 und einem in Fahrtrichtung hinter dem Rad 2 angeordneten und vertikal ausgerichteten Injektionsrohr 6. Dabei ist der Gelenkarm 5 einerseits im vorderen Bereich des Rahmens 1 über ein Drehgelenk 7 am Rahmen 1 angeschlagen und andererseits über ein Drehgelenk 8 mit dem vertikalen Injektionsrohr 6 verbunden. Damit sind der Gelenkarm 5 und das Injektionsrohr 6 gegenüber dem Rahmen 1 in vertikaler Richtung und das Injektionsrohr 6 gegenüber dem Gelenkarm 5 in horizontaler Richtung schwenkbar. An seinem freien, zum Erdboden gerichteten Ende besitzt jedes Injektionsrohr 6 eine aufgeschweißte Spokespitze 9 mit einer radialen Austrittsöffnung für den flüssigen Stoff.

Der Gelenkarm 5 ist durch ein Federelement 10 in Richtung zum Erdboden und das Injektionsrohr 6 durch ein Federelement 11 in Fahrtrichtung der Vorrichtung belastet. Es obliegt dem Fachmann, die Federelemente 10, 11 in Anpassung an bestimmte Anwendungen in einer solchen schrägen Einbaulage anzubringen, wie es beispielsweise die Lage des Federelementes 11 zeigt. Dadurch werden die Federkräfte in Kraftkomponenten zerlegt, die dann in ausgewählten Größenordnungen in die beiden genannten Richtungen wirken. Mit dieser schrägen Anordnung ist es auch denkbar, nur ein Federelement einzusetzen, das sowohl das Injektionsrohr 6 als auch den Gelenkarm 5 belastet und dessen ausreichend konzipierte Kraftkomponenten sowohl in die Fahrtrichtung als auch in die Bodenrichtung wirken. Am Rahmen 1 befinden sich an den passenden Stellen für jedes Injektionsrohr 6 jeweils ein Anschlag 12, mit dem der horizontale Schwenkbereich des jeweiligen Injektionsrohres 6 auf ein bestimmtes Maß beschränkt wird. Zur Einstellung der Schwenkbereiche sind die Anschläge 12 verstellbar ausgeführt.

Im Rahmen 1 ist eine die gesamte Breite des Rahmens 1 überspannende Profilwelle 14 gelagert, die mindestens ein, mit einem der Räder 2 der Vorrichtung in Wirkverbindung stehendes Reibrad 15 trägt. Außerdem befinden sich auf der Profilwelle 14 noch so viele Nockenscheiben 16, wie es Injektionseinrichtungen 4 gibt. Dabei sind die Nockenscheiben 16 auf der Profilwelle 14 so angeordnet, dass der Gelenkarm 5 jeder Injektionseinrichtung 4 durch seine Schwerkraft und durch die Kraft des Federelementes 10 auf die entsprechende Nockenscheibe 16 zur Auflage kommt.

Außerdem ist jede Nockenscheibe 16 außerhalb ihrer Rotationsachse auf der Profilwelle 14 befestigt, so dass sich bei einer Drehbewegung der Profilwelle 14 und der Nockenscheiben 16 die Abstände zwischen den Auflagen der einzelnen Gelenkarme 5 auf die entsprechende Nockenscheibe 16 und der Drehachse der Nockenscheiben 16 ändert. Zur Verringerung des Reibungswiderstandes zwischen dem Gelenkarm 5 und der dazugehörigen Nockenscheibe 16 wird der Gelenkarm 5 in vorteilhafter Weise mit einem Kugellager 17 ausgerüstet.

Die Nocken der Nockenscheiben 16 aller Injektionseinrichtungen 4 sind für einen asynchronen Bewegungsablauf aller Injektionseinrichtungen 4 in einer drallförmig verlaufenden Linie ausgerichtet. Damit wird eine gleichmäßige Belastung der Profilwelle 14 und des Reibrades 15 erreicht.

Zur Versorgung der Injektionseinrichtungen 4 mit dem flüssigen Stoff besitzt die Vorrichtung einen Flüssigkeitskreislauf mit einem zentralen Versorgungstank 18, einer zentralen Versorgungspumpe 19 und mehreren flexiblen Versorgungsleitungen 20, die den zentralen Versorgungstank 18 mit der radialen Austrittsöffnung einer jeden Spokespitze 9 verbinden. In jeder flexiblen Versorgungsleitung 20 befindet sich ein in Richtung zum Injektionsrohr 6 entsperrbares Rückschlagventil 21, das vorzugsweise als ein Membranabsperrventil ausgeführt und mit einem Betätigungsstößel ausgerüstet ist. Dabei ist das entsperrbare Rückschlagventil 21 durch den Gelenkarm 5 dauernd geschlossen, wobei der Betätigungsstößel des entsperrbaren Rückschlagventils 21 so auf die Schwenkbewegung des Gelenkarmes 5 abgestimmt ist, dass der Gelenkarm 5 kurz vor dem Erreichen des unteren Totpunktes den Kontakt des Betätigungsstößels verlässt und dadurch das entsperrbare Rückschlagventil 21 öffnet. Kurz nach dem Verlassen des unteren Totpunktes kommt der Betätigungsstößel wieder in Kontakt mit dem Gelenkarm 5 und das entsperrbare Rückschlagventil 21 wird geschlossen.

Zur Steuerung der zentralen Versorgungspumpe 19 besitzt die Vorrichtung weiterhin einen Steuerkreislauf mit einem Geschwindigkeitssensor 22, einer Steuerleitung 23 und einem elektrischen Steuerventil 24, wobei der Geschwindigkeitssensor 22 mit einem der Räder 2 korrespondiert und das elektrische Steuerventil 24 vom elektrischen Signal des Geschwindigkeitssensors 22 angeregt wird. Dabei ist die Versorgungspumpe 19 auf eine geschwindigkeitsabhängige Leistung eingestellt.

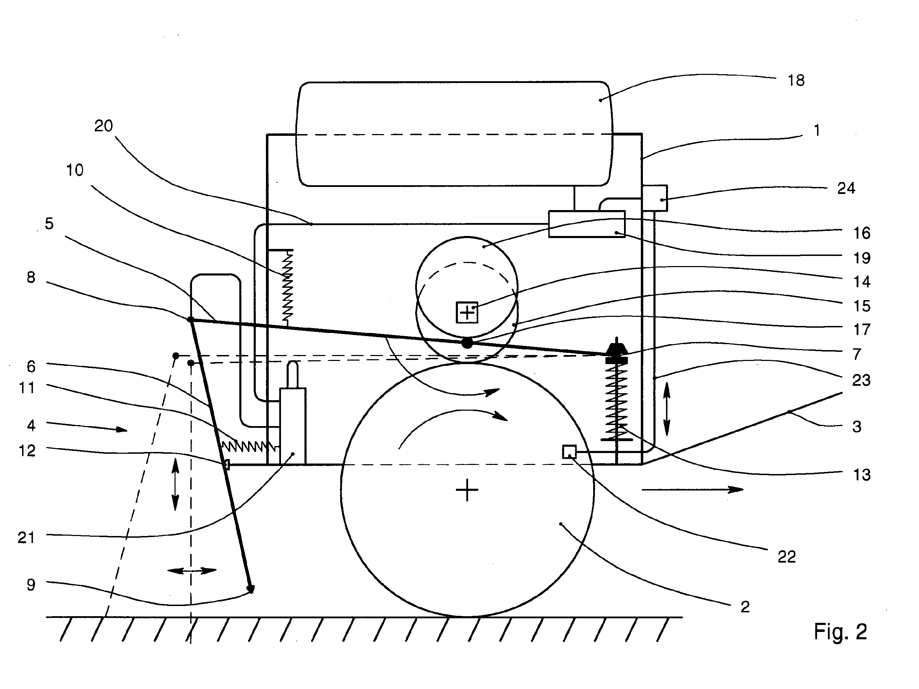

Das zweite Ausführungsbeispiel gemäß der Figur 2 unterscheidet sich vom ersten Ausführungsbeispiel im wesentlichen nur von der Anordnung des Gelenkarms 5 zur Nockenscheibe 16 und zum entsperrbaren Rückschlagventil 21.

So ist im zweiten Ausführungsbeispiel der Gelenkarm 5 sowie seine mit dem Drehgelenk 7 und dem Federelement 10 realisierte Lagerung derart angeordnet, dass der Gelenkarm 5 von unten gegen die Nockenscheibe 16 gedrückt wird. Dabei wird der Gelenkarm 5 an seiner dem Injektionsrohr 6 zugerichteten Seite von dem Federelement 10 nach oben gezogen. Auf der dem Injektionsrohr 6 weggerichteten Seite des Gelenkarms 5 befindet sich ebenfalls das Drehgelenk 7, welches aber über ein vertikal angeordnetes Federelement 13 mit dem Rahmen 1 verbunden ist. Dabei liegt das Federelement 13 in der gleichen Ebene wie der Gelenkarm 5 und das Federelement 10, wobei das Federelement 10 als Zugfeder und das Federelement 13 als Druckfeder dient und die Kraftwirkung des Federelements 13 größer als die Kraftwirkung des Federelement 10 ist.

Im zweiten Ausführungsbeispiel ist auch das entsperrbare Rückschlagventil 21 unterhalb der Nockenscheibe 16 angeordnet, wodurch sich auch die Wirkungsweise des entsperrbaren Rückschlagventils 21 im Vergleich zum ersten Ausführungsbeispiel unterscheidet.

Das entsperrbare Rückschlagventil 21 ist hier dauernd geschlossen und öffnet nur dann, wenn der Gelenkarm 5 in Kontakt mit dem Betätigungsstößel des entsperrbaren Rückschlagventils 21 kommt. Dazu ist der Betätigungsstößel des entsperrbaren Rückschlagventils 21 wiederum so auf die Schwenkbewegung des Gelenkarmes 5 abgestimmt, dass der Gelenkarm 5 erst kurz vor dem Erreichen des unteren Totpunktes mit dem Betätigungsstößel in Kontakt gerät und dadurch das entsperrbare Rückschlagventil 21 öffnet, und dass der Gelenkarm 5 kurz nach dem Verlassen des unteren Totpunktes den Kontakt mit Betätigungsstößel löst und dadurch das entsperrbare Rückschlagventil 21 schließt.

Die Funktion der Vorrichtungen soll nun für beide Ausführungsbeispiele an Hand der Figuren 1 und 2 für jeweils die einzige sichtbare Injektionseinrichtung 4 erläutert werden.

Im ruhenden Ausgangszustand liegt der Gelenkarm 5 durch die Kraft des Federelementes 10, wie im ersten Ausführungsbeispiel, oder durch die Kraftwirkung der Federelemente 10 und 13, wie im zweiten Ausführungsbeispiel, an der Nockenscheibe 16 an, und das Injektionsrohr 6 wird durch die Federkraft des Federelementes 11 an den Anschlag 12 des Rahmens 1 gezogen.

In der dargestellten Drehstellung der Nockenscheibe 16, in der das Kugellager 17 mit samt dem Gelenkarm 5 den höchsten Punkt erreicht hat, befindet sich die Spokespitze 9 am oberen Totpunkt einer Hubbewegung und damit außerhalb des Erdreiches in der rechten Position. Die Versorgungspumpe 19 fördert keinen flüssigen Stoff, weil der Geschwindigkeitssensor 22 keine Geschwindigkeit am Rad 2 feststellt.

Mit der Fortbewegung der Vorrichtung in Fahrtrichtung ermittelt der Geschwindigkeitssensor 22 die entsprechende Geschwindigkeit am Rad 2 und überträgt ein entsprechendes elektrisches Signal an das elektrische Steuerventil 24. Darauf regelt das Steuerventil 24 die Umdrehungsgeschwindigkeit der Versorgungspumpe 19 auf die entsprechende Größe ein, sodass sich vor dem entsperrbaren Rückschlagventil 21 ein entsprechender Flüssigkeitsdruck aufbaut. Das entsperrbare Rückschlagventil 21 bleibt zunächst geschlossen.

Mit der gleichen Fortbewegung der Vorrichtung in Fahrtrichtung treibt das Rad 2 der Vorrichtung das Reibrad 15 an, wodurch sich die Profilwelle 14 und die-Nockenscheibe 16 drehen.

Dabei folgt der an die Nockenscheibe 16 gedrückte Gelenkarm 5 den Kurvenverlauf der drehenden Nockenscheibe 16 und schwenkt zusammen mit dem Injektionsrohr 6 um das Drehgelenk 7. Mit der Schwenkbewegung des Gelenkarmes 5 führt das Injektionsrohr 6 eine Hubbewegung in Richtung zum Erdboden aus, wobei beide Bewegungen von der Kurve der Nockenscheibe 16 gesteuert werden. Damit bewegt sich das Injektionsrohr 6 von seinem oberen Totpunkt in Richtung zu einem unteren Totpunkt.

Im Rahmen dieser Hubbewegung gleitet das Injektionsrohr 6 am Anschlag 12 des Rahmens 1 abwärts, bis die Spokespitze 9 unter einem vorbestimmten Winkel auf den Erdboden aufsetzt. Dabei bilden die Spokespitze 9 und der Erdboden einen festen Drehpunkt. Durch die Fortbewegung der Vorrichtung hebt das Injektionsrohr 6 vom Anschlag 12 ab und schwenkt dabei um den festen Drehpunkt der Spokespitze 9 am Erdboden und um das Drehgelenk 8 zum Gelenkarm 5. Durch die Kraft des Federelementes 10, wie im ersten Ausführungsbeispiel, oder durch die Kraft der Nockenscheibe 16, wie im zweiten Ausführungsbeispiel, dringt das Injektionsrohr 6 mit seiner Spokespitze 9 in den Erdboden ein und verlagert den Drehpunkt von der Oberfläche des Erdbodens bis in eine vorbestimmte Injektionstiefe entsprechend der gestrichelt dargestellten mittleren Position. In dieser Position der Spokespitze 9 nimmt auch der Gelenkarm 5 seine tiefste Position ein, wobei das entsperrbare Rückschlagventil 21 geöffnet wird. Dadurch strömt eine dosierte Flüssigkeitsmenge unter dem von der Fortbewegungsgeschwindigkeit der Vorrichtung abhängigen Druck von der Versorgungspumpe 19 durch die flexible Versorgungsleitung 20, durch das Injektionsrohr 6 bis in die Spokespitze 9, wo es aus der radialen Austrittsöffnung austritt und sich im Bereich des Drehpunktes ablagert.

Durch die Fortbewegung der Vorrichtung und der damit verbundenen Rotation der Nockenscheibe 16 hebt im ersten Ausführungsbeispiel die Nockenscheibe 16 und im zweiten Ausführungsbeispiel die Kraft des Federelementes 10 den Gelenkarm 5 und damit das Injektionsrohr 6 wieder an, sodass die Spokespitze 9 ihren Drehpunkt wieder in Richtung zur Oberfläche des Erdbodens verlagert. Gleichzeitig verschiebt sich auch der Betätigungsstößel des entsperrbaren Rückschlagventils 21 und verschließt den Öffnungsquerschnitt des Rückschlagventils 21. Damit ist die Injektion für diesen Drehpunkt beendet. Auf dem Wege zum oberen Totpunkt der Hubbewegung verlässt die Spokespitze 9 in der gestrichelt dargestellten linken Position den Erdboden und das Injektionsrohr 6 legt sich durch die Kraft des Federelementes 11 wieder am Anschlag 12 des Rahmens 1 an. Dieser Vorgang wiederholt sich, solange die Vorrichtung fortbewegt wird.

Trifft die Vorrichtung während der Fahrt beispielsweise auf vorhandene Bodenhindernisse, wie Steine und dergleichen, die auf dem Boden liegen, dann schlägt das Injektionsrohr 6 an dieses Hindernis an, wobei im ersten Ausführungsbeispiel die Zugkraft eines Federelementes 10 überwunden wird und dadurch das Injektionsrohr 6 sowie dessen Spokespitze 9 gegen Deformation oder Bruch geschützt wird.

Im zweiten Ausführungsbeispiel wird mit dem Auftreffen des Injektionsrohres 6 auf das Hindernis die Kraft der Nockenscheibe 16 auf das Injektionsrohr 6, den Gelenkarm 5 und dessen Drehgelenk 7 sowie auf das Federelement 13 übertragen. Dabei sichert hier die vertikale Verschiebung des federnd gelagerten Drehgelenks 7 das Injektionsrohr 6 und dessen Spokespitze 9 gegen Deformation oder Bruch.

In beiden Ausführungsbeispielen verharrt die Spokespitze 9 in dieser Position. Die Nockenscheibe 16 dreht sich weiter, während der Gelenkarm 5 aufgrund des Bodenwiderstandes ebenfalls in seiner Stellung verharrt. Dabei erreicht die Spokespitze 9 nicht den unteren Totpunkt, so dass der Betätigungsstößel des entsperrbaren Rückschlagventils 21 nicht betätigt wird und keine Injektion erfolgt.

Durch die Vorwärtsbewegung der Vorrichtung gleitet das Injektionsrohr 6 über dieses Hindernis hinweg, wobei beim gleichzeitigen Weiterdrehen der Nockenscheibe 16 im ersten Ausführungsbeispiel diese Nockenscheibe 16 wieder Kontakt mit dem Gelenkarm bekommt und dadurch das Injektionsrohr aus dem Erdboden heraushebt.

Im zweiten Ausführungsbeispiel wird beim Weiterdrehen der Nockenscheibe 16 zuerst das Federelement 13 entspannt und dann das Injektionsrohr 6 durch die Wirkung der Federkraft des Federelements 10 aus dem Erdboden herausgehoben.

Mit dieser Vorrichtung wird ein flüssiger Stoff in einer neuen Verfahrensweise aus einem zentralen Versorgungstank 18 über eine Versorgungsleitung 20 zu einer in den Erdboden eingestochenen Spokespitze 9 einer Injektionseinrichtung 4 befördert. Dabei fährt die Vorrichtung entlang einer oder mehreren Reihen von Kulturpflanzen, wobei jeder Pflanzreihe ein Injektionsrohr 6 mit einer Spokespitze 9 zugeordnet ist. Diese Spokespitze 9 wird während der Fortbewegung der Vorrichtung im Intervall und vertikal in den Erdboden gestochen und verbleibt während der Weiterfahrt der Vorrichtung an der Einstichstelle. Während dieser Zeit wird der flüssige Stoff in einer vorbestimmten Menge mit einem Druck eingespritzt, der von der Fahrgeschwindigkeit der Vorrichtung bestimmt wird.

### Aufstellung der Bezugszeichen

- 1: Rahmen
- 2: Rad
- 3: Zugstange
- 4: Injektionseinrichtung
- 5: Gelenkarm
- 6: Injektionsrohr
- 7: Drehgelenk
- 8: Drehgelenk
- 9: Spokespitze
- 10: Federelement des Gelenkarms
- 11: Federelement des Injektionsrohres
- 12: Anschlag
- 13: Federelement des Gelenkarms
- 14: Profilwelle
- 15: Reibrad
- 16: Nockenscheibe
- 17: Kugellager
- 18: Versorgungstank
- 19: Versorgungspumpe
- 20: Versorgungsleitung
- 21: entsperrbares Rückschlagventil
- 22: Geschwindigkeitssensor
- 23: Steuerleitung
- 24: Steuerventil

## Patentansprüche

1. Verfahren zum Einbringen von flüssigen Stoffen in den Erdboden, bei dem eine Vorrichtung zum Einbringen des flüssigen Stoffes mit einer vorbestimmten Geschwindigkeit entlang einer oder mehrerer Reihen von Pflanzen fortbewegt wird und während dieser Zeit Injektionsrohre (6) in den Erdboden gestochen werden, wobei während des Einstechens der flüssige Stoff in den Erdboden eingespritzt wird und die Zeit des Einspritzens von der Fahrgeschwindigkeit der Vorrichtung bestimmt wird,
**dadurch gekennzeichnet, dass** für jede Pflanzreihe nur ein Injektionsrohr (6) verwendet wird und dass das Injektionsrohr (6) im Intervall und annähernd vertikal in den Erdboden eingestochen wird und während der Weiterfahrt der Vorrichtung für eine vorbestimmte Zeiteinheit an der Einstichstelle verbleibt.

2. Verfahren nach Anspruch 1,
**dadurch gekennzeichnet, dass** das Injektionsrohr (6) durch die Kraft eines Federelementes (10) in den Erdboden eingestochen wird.

3. Verfahren nach Anspruch 1,
**dadurch gekennzeichnet, dass** das Injektionsrohr (6) durch die Kraft einer Nockenscheibe (16) in den Erdboden eingestochen wird.

4. Verfahren nach Anspruch 1, wobei die Vorrichtung mehrere Pflanzreihen überbrückt,
**dadurch gekennzeichnet, dass** alle Injektionsrohre (6) aller Pflanzreihen von Pflanzreihe zu Pflanzreihe in der Zeit versetzt eingestochen werden.

5. Vorrichtung zum Einbringen von flüssigen Stoffen in den Erdboden, bestehend aus einem auf Rädern (2) stehenden, mehrere Reihen von Kulturpflanzen überdeckenden Rahmen (1) und mehreren, am Rahmen (1) befestigten Injektionseinrichtungen (4), wobei jeder Reihe von Kulturpflanzen eine Injektionseinrichtung (4) zugeordnet ist und jede Injektionseinrichtung (4) mit einer Versorgungspumpe (19) verbunden ist und Einrichtungen zur zeitgemäßen und mengenmäßigen Versorgung eines Injektionsrohres (6) mit dem flüssigen Stoff besitzt,
**dadurch gekennzeichnet, dass** die Räder (2) und die Injektionseinrichtungen (4) als getrennte Baugruppen ausgeführt sind und jede Injektionseinrichtung (4) aus einem gegenüber dem Rahmen (1) der Vorrichtung vertikalbeweglichen und antreibbaren Injektionsrohr (6) besteht, das zur Realisierung seines erforderlichen Bewegungsablaufs und zu seiner zeitgemäßen und mengenmäßigen Versorgung mit dem flüssigen Stoff funktionell mit mindestens einem Rad (2) verbunden ist.

6. Vorrichtung nach Anspruch 5,
**dadurch gekennzeichnet, dass** das Injektionsrohr (6) der Injektionseinrichtung (4) in Fahrtrichtung hinter den Rädern (2) angeordnet ist.

7. Vorrichtung nach Anspruch 5,
**dadurch gekennzeichnet, dass** zur Realisierung des erforderlichen Bewegungsablaufs des Injektionsrohres (6) zwischen dem Rad (2) und dem Injektionsrohr (6) und zur zeitgemäßen Versorgung des Injektionsrohres (6) mit dem flüssigen Stoff zwischen dem Rad (2) und dem Betätigungsstößel eines in einer Versorgungsleitung (20) befindlichen entsperrbaren Rückschlagventils (21) jeweils ein mechanisches Getriebe vorgesehen ist.

8. Vorrichtung nach Anspruch 7,
**dadurch gekennzeichnet, dass** als gemeinsames mechanisches Getriebe eine Nockenscheibe (16) verwendet wird, die einerseits über ein Reibrad (15) mit dem Rad (2) der Vorrichtung und andererseits über einen gegenüber dem Rahmen (1) der Vorrichtung vertikal schwenkbaren Gelenkarm (5) mit dem Injektionsrohr (6) und mit dem Betätigungsstößel des entsperrbaren Rückschlagventils (21) verbunden ist, wobei zwischen dem Gelenkarm (5) und dem Rahmen (1) ein Drehgelenk (7) angeordnet ist, und wobei das Injektionsrohr (6) über ein Drehgelenk (8) horizontal schwenkbar mit dem Gelenkarm (5) verbunden ist und von mindestens einem Federelement (11) in Fahrtrichtung der Vorrichtung belastet wird.

9. Vorrichtung nach Anspruch 8,
**dadurch gekennzeichnet, dass** der Gelenkarm (5) oberhalb der Nockenscheibe (16) angeordnet ist und von mindestens einem Federelement (10) in Richtung zum Erdboden belastet wird.

10. Vorrichtung nach Anspruch 8,
**dadurch gekennzeichnet, dass** der Gelenkarm (5) unterhalb der Nockenscheibe (16) angeordnet ist und von der Kraft der Nockenscheibe (16) in Richtung des Erdbodens belastet wird, wobei zwischen dem Drehgelenk (7) und dem Rahmen (1) mindestens ein Federelement (13) angeordnet ist, so dass das Drehgelenk (7) bei Überwindung der Federkraft des Federelements (13) in vertikaler Richtung verschiebbar ist.

11. Vorrichtung nach einem der Ansprüche 9 oder 10,
**dadurch gekennzeichnet, dass** der Betätigungsstößel des entsperrbaren Rückschlagventils (21) von der vertikalen Hubbewegung des Injektionsrohres (6) in der Art gesteuert wird, dass das Rückschlagventil (21) in der zum Erdboden gerichteten Bewegung des Injektionsrohres (6) öffnet und in der entgegengesetzten Richtung schließt.

12. Vorrichtung nach Anspruch 5,
**dadurch gekennzeichnet, dass** zur mengenmäßigen Versorgung des Injektionsrohres (6) mit dem flüssigen Stoff mindestens ein Rad (2) der Vorrichtung mit einem Geschwindigkeitssensor (22) ausgestattet ist, der über eine Steuerleitung (23) mit einem die Versorgungspumpe (19) in ihrer Leistung beeinflussenden Steuerventil (24) verbunden ist.
